# EUROPEAN PATENT SPECIFICATION

(11) **EP 0 538 905 B1**
(45) Date of publication and mention of the grant of the patent: **17.07.1996**
(21) Application number: 92119069.0
(22) Date of filing: 08.03.1988
(51) Int. Cl.: H02K 15/095

(54) **Equipment for the actuation of needles for the realization of electric motors field windings**
Betätigungsgerät für Legenadeln zur Herstellung von Feldwicklungen elektrischer Motoren
Dispositif de mise en action des tubes de guidage pour la fabrication de bobinages de champ pour moteurs électriques

(30) Priority: 26.11.1987 IT 6800987
(43) Date of publication of application: 28.04.1993
(62) Divisional of application: 88200431.0
(73) Proprietor: AXIS S.p.A., I-50028 Tavarnelle Val di Pesa (Firenze) (IT)
(72) Inventor: Luciano,Sabatino, I-50100 Firenze (IT); Lumini,Antonio, I-50019 Sesto Fiorentino(Firenze) (IT)
(74) Representative: Lotti, Giorgio

(56) References cited:
- EP-A- 0 209 624
- US-A- 3 025 008
- US-A- 3 903 593

## Description

The invention refers to an equipment for the actuation of needles for the realization of electric motors field windings.

The invention refers in particular to a variable stroke kinematic device which drives the reciprocating motion of a hollow shaft traversed by winding vire. The hollow shaft carries a concentric tube which drives the needle holder heads; these wind the wire into the stator slots.

Machines for forming stator windings are known in which a needle, driven with rectilinear reciprocating motion combined with reciprocating rotary motion about its axis, carries at least one copper wire unwinding from a reel in order to deposit it into the stator slots. The needle comprises one point if a single winding is to be made, or comprises two opposing points if both windings are to be made simultaneously. In all cases, the needle always has its axis of advancement and rotation coinciding with the stator axis in order to enable it to slide in the open spaces between the slots within the stator during its to-and-fro movement and to lie equidistant from all the stator slots into which its points are to wind the copper wire.

U.S. Patent 3,025,008 shows an apparatus for alternately reciprocating and oscillating a group of four wire dispensing needles. The four needles move together as a unit. The length of the oscillation stroke is adjustable based on the insertion of one of a series or pivot pins in a lever member.

U.S. Patent 3,903,593 shows an apparatus for alternately reciprocating and oscillating winding needles. The length of the oscillation stroke is adjustable, depending on the location of a shaft along an oscillating member.

In the two above apparatus winding forms, also known as shoes, are applied to the ends of the respective slots, and are shaped in such a manner as to accompany the copper wire of the needle into the slot, when the needle rotates external to the stator.

In its European Patents No. 0.200.236 and No. 0.208.811 the Applicant describes two different embodiments of the wire delivering needles by means of which the field windings may be made without employing the traditional shoes.

The first European patent No. 0.200.236 describes a winding needle animated by straight-line reciprocating motion combined with reciprocating rotatory motion around its own axis, where the needle is eccentric with respect to the centre of the stator and finds itself at such a distance, along the axis of symmetry of the slots to which it is adjacent, that the height of the point of the needle, calculated as a distance between its end and the axis, is equal or greater than the distance between the axis of the needle and the end of the front retaining tooth of the winding in the slots.

The second European patent No. 0.208.811 describes a winding needle animated by straight-line reciprocating combined with reciprocating rotatory motion around its own axis where the end points of the needle are split and oscillate between a maximum approach position in which the distance between them is smaller than the maximum size of the internal opening of the stator and a maximum straddle position, in which the ends of the points are at a greater distance than the one between the ends of the teeth for retaining the windings in the opposed slots of the stator.

In both cases the needles must perform complex traverse and reciprocating rotatory motion with the purpose of obtaining a field winding machine which allows for the elimination of winding forms or shoes and consequently of the devices for fixing and clearing them from the stator.

By eliminating the form or shoes, these solution offer a second advantage, which is to improve the winding formed around each slot, by reducing the stroke of the needle and the loop formed by the wire externally to the stator.

Purpose of the invention is to propose a kinematic device able to actuate alternatively both the above mentioned types of needles by substituting the needle holder heads relating to the end of the kinematic device.

For these purposes that will be better understood in the description which follows, the invention proposes to realize a machine for the actuation of needles for the realization of stator field windings according to claim 1 and a method of winding variable length stators according to claim 10.

A description of the machine follows and reference must be made to the enclosed drawings:
- Fig. 1: is a sectional view of the machine according to the invention;
- Fig. 2 and 3: are sectional views respectively according to outlines II-III of Fig. 1;
- Fig. 4: is the perspective view of the casing which contains the machine according to the invention;
- Fig. 5 and 6: are sectional views according to outline V-V of Fig. 1 in different operating conditions of the illustrated unit;
- Fig. 7: is the axial view of the needle holder unit as the first realization of the invention;
- Fig. 7a: is the perspective view of a particular of Fig. 7;
- Fig. 8: is the perspective view of a stator in which the needle holder unit illustrated in Fig. 7 operates;
- Fig. 9: is the axial section of the needle holder unit as the second realization of the invention;
- Fig. 10: is the enlarged view of a particular of the unit illustrated in Fig. 9;
- Fig. 11: is the view according to arrow A of Fig. 9.

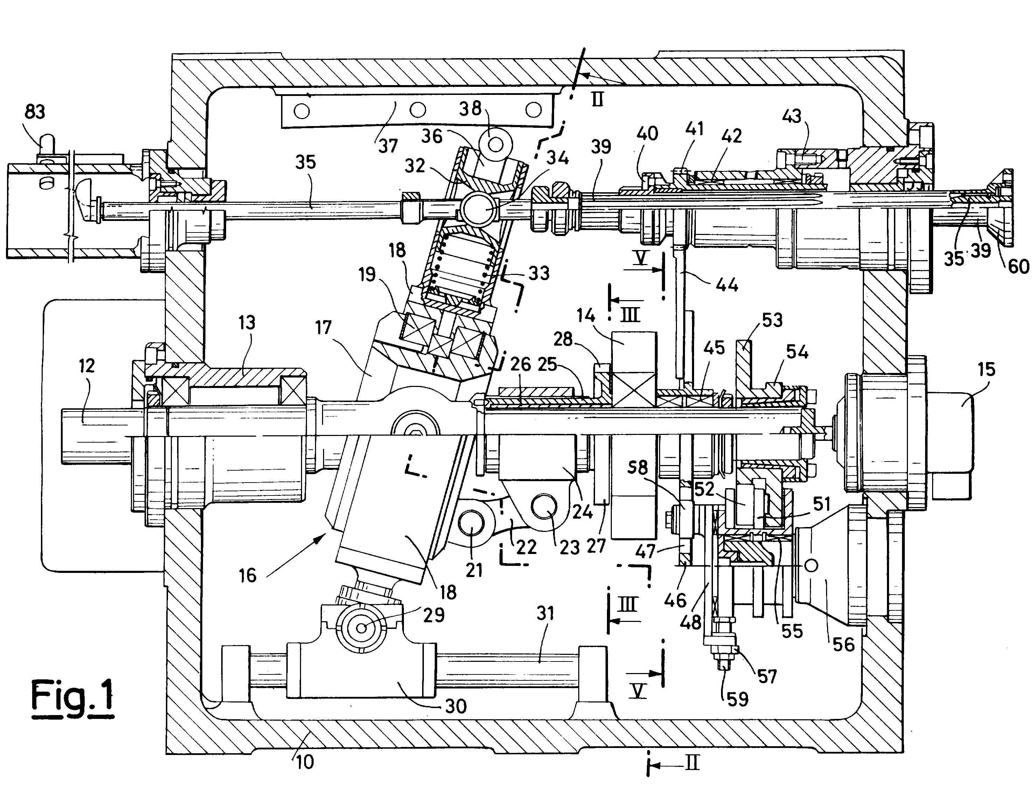

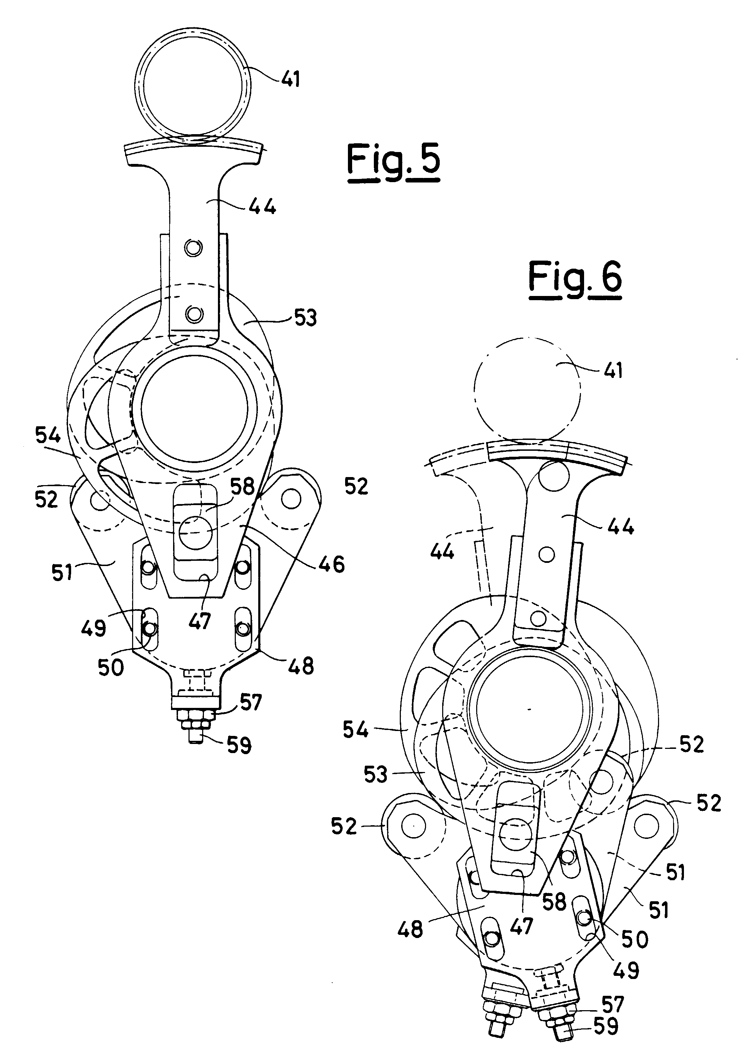

According to the invention the machine is enclosed in a casing 10 (figures 1 and 4) on which an electric motor 11 is assembled, advantageously direct current operated and of the type without brushes, which by means of belt 9, acts directly on a main shaft 12. The latter is assembled on supports 13 and 14 of the casing and its position during rotation is controlled by an encoder 15 placed on the end of the main shaft 12 opposed to the one connected to motor 11 (see Fig. 1).

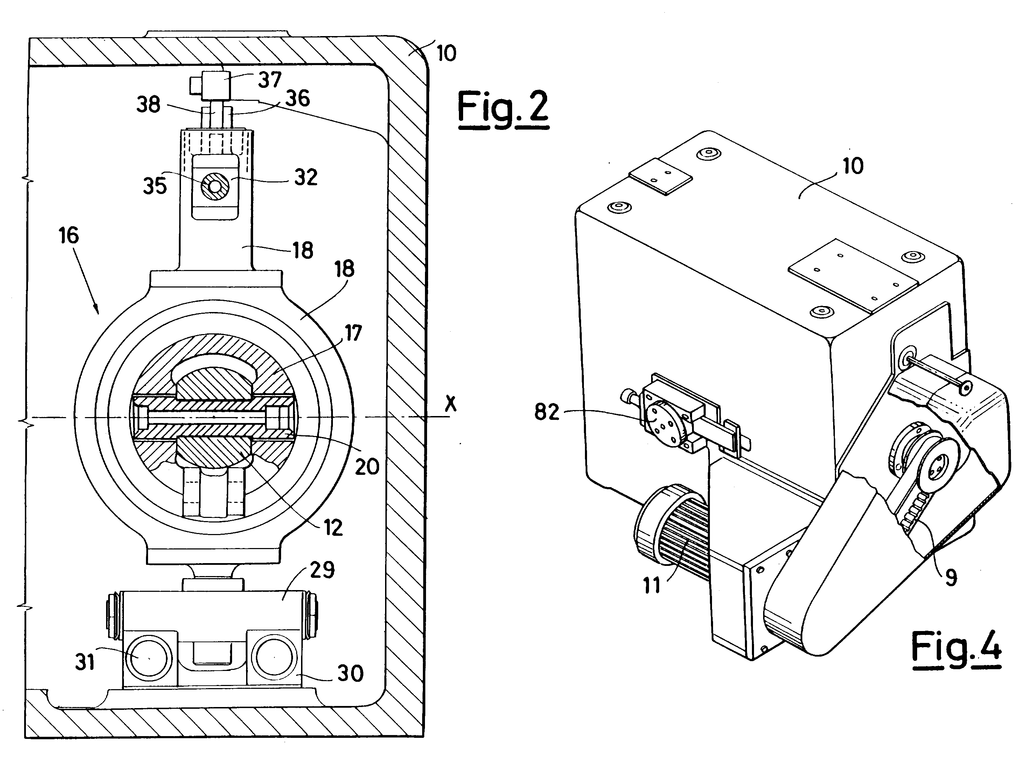

On the shaft 12 a disk assembly 16 is assembled (Figures 1, 2, 3) which holds disk 17 assembled in rotating mode in a frame body 18 by means of bearings 19. The disk (17) is assembled in oscillating mode on the main shaft 12 by pins 20 traversely placed with respect to the axis of same shaft 12 so that the disk 16 assembly may oscillate on the shaft 12 around x axis of pins 20.

To the disk 17 is pivoted in 21 connecting rod 22 which is also pivoted in 23 on a sleeve 24. The latter, internally threaded, is screwed on the external thread of a coupling sleeve 25 which is assembled on shaft 12 by bushing 26 and equipped with flange 27 in which a notch 28 is machined.

The frame 18 in the lower part is pivoted in 29 on bushings 30 sliding along guides 31 which are integral with case 10.

In the upper part, the frame 18 is box-type and seats internally a slideable cursor 32 which is thrusted towards the exterior by a spring 33. Cursor 32 is hinged to a circular portion 34 integral to the winding shaft 35, to which the reciprocating motion of the disk is transmitted, and it holds a roller 38, assembled on the end 36 of the cursor 32, sliding on a longitudinal race 37 which is integral to the casing 10; in this way centrifugal stresses of the cursor 32 are avoided on the shaft 35 as the race 37 takes up the loads of the cursor 32.

The winding shaft 35 is hollow and the cables appointed for the realization of the field windings slide into it.

On the shaft 35 an externally splined tube 39 concentric to it is inserted; a sleeve 40, internally splined is assembled on the tube 39 and holds a pinion 41 integral to it, assembled by means of bearings 42 on an external support 43 secured to the casing 10.

The pinion 41 is set in rotation by a sector gear 44 assembled neutrally on main shaft 12, by means of bearing 45, and holding, on the other side with respect to shaft 12, a tailpiece 46 equipped with a slot 47 (Figures 1, 5 and 6).

A cursor 58 slides in the slot 47, integral to a slotted link 48 equipped with slots 49 in which pins 50 of a crank V-shaped plate 51 can slide. To the ends of the plate 51 rollers 52 are hinged and on each of them acts the surface of two coupled cams 53 and 54.

The V-shaped plate 51 is assembled on bearings 55 of a support 56, while the coupled cams 53 and 54 are keyed on the main shaft 12.

Through cams 53 and 54, rotating shaft 12 action can be made on roller 52 thereby making crank V-shaped element 51 oscillate together with slotted link 48 and also of the tailpiece 46 integral to the sector gear 44 which makes gear 41 rotate. By means of the latter, integral to the sleeve 40, the rotation of tube 39 can be obtained.

It is sufficient to loosen the nut 57 and to rotate the screw 59, moving upward or downward the position of slotted link 48 and then of its cursor 58 in the slot 47, in order to vary the amplitude of the oscillation of the tube 39.

To the end of the rotating tube 39 a flange 60 is applied which transmits the rotatory motion to the winding needles integral to reciprocating shaft 35.

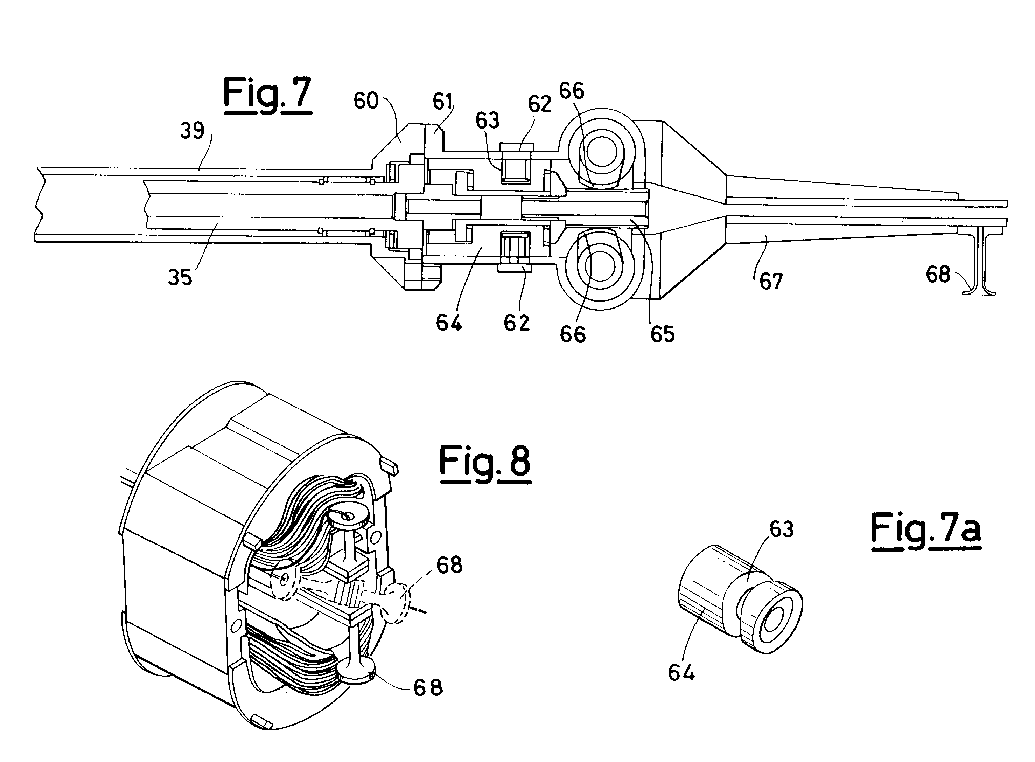

In the solution illustrated in figures 7, 7a and 8 the needles describe an ellipse path by stradling and rotating at the front and back outlets of the stator as described and claimed in the european patent No. 0.208.811 mentioned above.

In order to obtain this movement of the needles, jacket 61 is applied to flange 60. The jacket holds two opposed pins 62 integral slot neutrally engaged in a circular slot of an internal sleeve 64.

The sleeve 64 can slide to translate in jacket 61 this movement is realized due to the fact that the sides 63 of its slot (Fig. 7a) have an arched shape and do not lie in a perpendicular plane to the axis of the needles so that when the jacket 61 rotates, driven by the shaft 39 to which it is integral, the pins 62 rotate in the two opposite directions, depending on the direction of translation of the sleeve 64, as they slide on the cam track realized by slot 63.

The front end of the sleeve 64 holds integral a rack which meshes with sector gears 66 integral with the needle holder 67.

The sliding of the sleeve 64 and of its rack 65 then determines the rotation respectively in the opening and closing of the needles 68 (see Fig. 8).

Translation by the sleeve 64 is in time with the reciprocating traverse motion of the winding shaft so the path of the needles 68 will result as ovoid-shaped external to the stator, having the advantage that, when calculating different shapes of cams 63 on the sleeve 64 it will be possible to find the optimum path of the wire in order to obtain better coils.

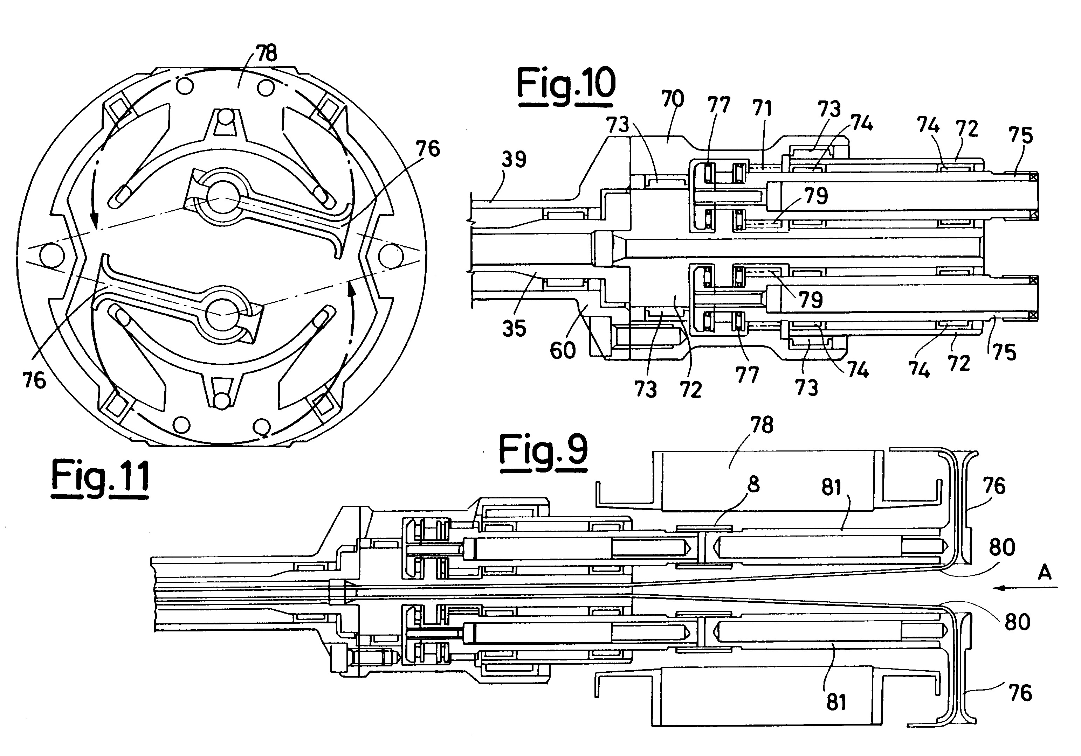

In the second solution illustrated in Figures 9, 10 and 11 the needles are eccentric with respect to the axis of the winding shaft 35 and thus of the stator and at the outlets of the same stator they execute arcs of circle (Fig. 11) while they wind the cable as described and claimed in the European patent N° 0.200.236 mentioned above.

An external jacket 70 is connected to flange 60 having internal toothing 71. Integral to winding shaft 35, a shaft 72 is assembled on bearings 73 in the inside of the jacket 70, in this way jacket 70 can rotate on shaft 72.

Into the seats of shaft 72, and assembled on bearings 74, are two tubes 75 for coupling of the needles 76. Front bearings 77 assembled between the internal ends of the tubes 75 and projections of the internal shaft 72 allow for discharge of stretching and stresses that take place on needles 76 at the end of respective winding strokes at the outlet of the stator 78.

The tubes 75 are then geared in 79 so as to engage in the toothings 71 of the external jacket and to be driven in rotation by the latter.

The two needles 76 carrying the respective winding wires 80 are assembled integral to coupling tubes 81 and are locked at the end of tubes 75 by threaded coupling sleeves 8.

By utilizing the above described machine contained in the casing 10 it is possible to effect an automatic adjustment of the stroke of the winding shaft 35 and a manual adjustment of the oscillation amplitude of the tube 39 and thus of the winding needles 68 or 76.

The automatic adjustment of the stroke of the winding shaft 35 may be programmed by the microprocessor which controls the motor 11.

The value of the stroke to be accomplished can be set on the video of the machine, that is a command is given for a preset stroke relating to the length of the stator on which the winding must be made.

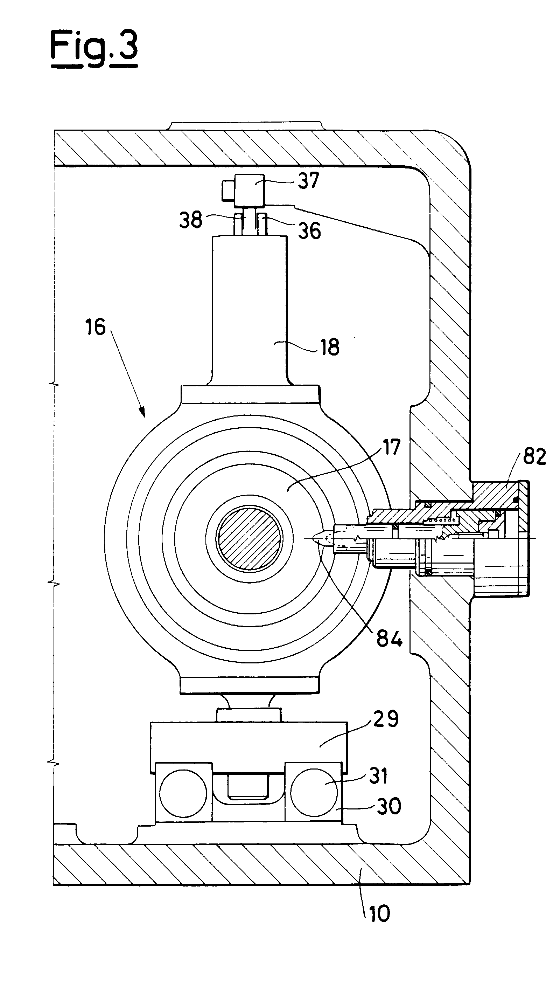

The microprocessor starts, by controlling a pneumatic unit 82 (Fig. 3 and 4), to carry out the movement of a pin 84 which engages in the notch 28 (Fig. 1) machined in the flange 27. This engagement avoids the rotation of the coupling sleeve 25; the motor 11 starts to rotate at such a speed as it has been programmed by the software regarding adjustments. Its position is controlled by the encoder 15 placed on the main shaft 12 on the opposite side of the motor.

Therefore, when the motor brings in rotation the disk 17 the sleeve 24 will also rotate through the connecting rod 22.

As the coupling sleeve 25 is locked by the above mentioned engagement, the sleeve 24 will slide longitudinally due to the thread in its interior and on the coupling sleeve 25 until it brings the frame 18 to the maximum backward inclination toward the motor.

The winding shaft 35 will have thus run all the possible backward stroke until when it will enter into the operating field of a microsensor 83, which will communicate for the encoder that from that moment on when the encoder will find a reference notch the adjustment will find itself in 0 condition, and therefore the adjustment will have been reset.

From this moment on the motor 11 may reverse the rotation direction and return to a condition of a new stroke set on the video for a new stator to be wound, so the encoder 15 will start the count of the notches until it will stop on the one which refers to the programmed stroke.

The notches of the encoder are connected to the stroke by a data table placed in the microprocessor. Such data indicates, by trigonometric calculations carried out previously, the correlation between the notches of the encoder 15 and the stroke of the winding shaft 35, because as can be seen in the drawings, the movement of the shaft 35 results amplified by the oscillating disk with respect to the movement of the sleeve 24.

The manual adjustment of the oscillation amplitude of the tube 39 takes place by acting on the screw 59 after loosening the nut 57 (Fig. 1, 5 and 6). In this way the crank and slotted link moves upward or downward depending on the direction of the rotation of the screw, thus changing the oscillation angle of the sector 44 which leads to the oscillation variation of the tube 39 by means of the sleeve 40.

## Claims

1. A machine for the actuation of needles for the realisation of stator field windings comprising:
- a casing (10) and needles (68,76) which accomplish longitudinal reciprocatory motion and oscillatory motion for delivering wire to form the field windings;
- a main shaft (12) driven for rotational motion by motor means (11);
- a shaft (35) having a longitudinal axis and being mounted for longitudinal reciprocation relative to said casing (10) parallel to said longitudinal axis;
- connecting means (61-66, 70, 75) for connecting the needles (68, 76) to the shaft (35) and for causing the needles (68, 76) to reciprocate longitudinally in response to the longitudinal reciprocation of the shaft (35);
- reciprocating means (16, 17, 18) for causing the needles (68, 76) to reciprocate longitudinally for a stroke depending on the length of said stator and in response to the rotational motion of said main shaft;
- oscillating means (53, 54) for causing the needles (68, 76) to oscillate rotationally;
- adjustment means (22-24) for adjusting said stroke depending on the length of said stator;
characterised in that:
said adjustment means (22-24) obtains said adjustment automatically and further comprises:
- means for storing predetermined amounts of said rotational motion of said main shaft (12) for corresponding programmable amounts of said stroke adjustments, and
- means for controlling said rotational motion of said main shaft (12) to obtain a programmable amount of said stroke adjustment for a specific stator length.

2. A machine defined in claim 1 characterised in that said reciprocating means (16,17,18) comprises:
- a disk (17) pivoted perpendicularly to the main shaft (12) so that the disk (17) can rotate together with the main shaft (12), and
- means (22-24) for maintaining said disk (17) at a desired inclination with respect to said main shaft (12) during the reciprocation stroke of said needles (68,76).

3. The machine defined in claims 1 and 2 characterised in that said adjustment means (22-24) adjust the inclination of said disk (17) in relation to said main shaft (12) by a predetermined amount to adjust the reciprocation stroke of said shaft (35).

4. The machine defined in claim 3 wherein the means (22-24) for adjusting the disk (17) to a desired inclination in relation to the main shaft (12) comprises:
- linkage means (22) for connecting the disk (17) to a sleeve (24) and means (11, 84) for causing relative rotation of said sleeve (24) and the main shaft (12) to obtain adjustment of the reciprocation stroke of said shaft (35).

5. The machine defined in claim 3 wherein the means for adjusting the reciprocation stroke of said shaft (35) obtains the adjustment automatically and further comprises:
- means for storing predetermined amounts of said stroke adjustments;
- means for controlling the inclination of the disk (17) with said main shaft (12) to obtain a programmable amount of said stroke adjustment for a specific stator length.

6. The machine defined in claim 4 wherein said sleeve (24) which is mounted on said main shaft (12) moves axially relative to said main shaft (12) to change the inclination of said disk (17) during adjustment of the reciprocation stroke of said shaft (35).

7. The machine defined in claim 2 wherein the means (22-24) for maintaining the disk (17) at a desired inclination in relation to the main shaft (12) comprises:
- linkage means (22) for connecting the disk (17) to a sleeve (24) assembled to rotate together with the main shaft (12) during reciprocation of the shaft (35).

8. The machine defined in claims 1 and 2 wherein said reciprocating means (16,17,18) comprises means (32, 34) for connecting the disk (17) to the shaft (35) to allow relative motion of said disk (17) with respect to said shaft (35) during reciprocation of said shaft (35).

9. The machine defined in claim 1 wherein the means for connecting the disk (17) to the shaft (35) comprises:
- frame means (18) for seating the disk and allowing rotation of the disk with the main shaft (12);
- cursor means (32) slideably mounted on the frame means (18) and pivot means (34) for connecting the cursor means (32) to the shaft (35).

10. The machine defined in claim 1 wherein said adjustment means (22-24) further comprises:
- means (82,84,28) for stopping the motion of a part of said reciprocating means (16,17,18) with respect to said casing (10) during the rotational motion of said main shaft (12) to obtain a programmable amount of said stroke adjustment for a specific stator length.

11. The machine defined in claim 10 wherein said means for stopping comprises:
a pneumatic unit (82) which engages a pin (84) in a notch (28) of said part of said reciprocating means (16,17,18) to stop the motion of said part of said reciprocating means.

12. In a machine for winding stators, a method of winding variable length stators being characterised in that it comprises the steps of:
- rotating a main shaft (12);
- reciprocating a longitudinal shaft (35) for causing needles to translate through the stator for strokes depending on the length of the stator being wound and in response to the rotation of said main shaft;
- storing predetermined amounts of said main shaft (12) rotations corresponding to said strokes and depending on the length of the stator to be wound; and
- controlling the rotation of said main shaft (12) to obtain programmable strokes depending on the length of the stator to be wound.

13. The method of claim 12 further comprising the steps of:
- coupling a disk (17) to a sleeve (24) mounted on said main shaft (12) so that the disk can rotate together with the main shaft and so that the disk can be inclined in relation to the longitudinal axis of rotation of the main shaft;
- connecting the disk to the shaft (35) to convert rotation of the main shaft in reciprocation of the shaft;
- adjusting the inclination of the disk to modify the reciprocation stroke of the shaft so that the needles translate through the stator for strokes depending on the length of the stator being wound;
- causing relative rotation of said main shaft (12) and said sleeve (24) for predetermined amounts depending on the stroke adjustment required for a stator length to be wound.

## Patentansprüche

1. Maschine zum Betätigen von Wickelnadeln für die Herstellung von Statorfeldwicklungen umfassend:
- ein Gehäuse (10) und Wickelnadeln (68, 76), die eine hin- und hergehende Bewegung in Längsrichtung ausführen, um Draht zum Bilden der Feldwicklungen zuzuführen;
- eine Hauptwelle (12), die durch ein Motormittel (11) für eine Rotationsbewegung angetrieben wird;
- ein Schaft (35), der eine Längsachse aufweist und der für eine hin- und hergehende Bewegung in Längsrichtung relativ zum Gehäuse (10) parallel zu dessen Längsachse befestigt ist;
- Verbindungsmittel (61-66, 70, 75), um die Wickelnadeln (68, 76) mit dem Schaft (35) zu verbinden und um die Wickelnadeln (68, 76) zu veranlassen, sich in Längsrichtung als Reaktion auf die Hin- und Herbewegung in Längsrichtung des Schaftes (35) hin- und herzubewegen;
- Hin- und Herbewegungsmittel (16, 17, 18), um die Wickelnadeln (68, 76) zu veranlassen, sich in Längsrichtung um die Länge eines Hubes hin- und herzubewegen, der von der Länge des Stators und von der Reaktion der Rotationsbewegung der Hauptwelle abhängt;
- oszillierende Mittel (53, 54), um die Wickelnadeln (68, 76) zu veranlassen, in Rotationsrichtung zu oszillieren;
- Einstellmittel (22-24) zum Einstellen des Hubes, der von der Länge des Stators abhängt;
dadurch gekennzeichnet, daß
das Einstellmittel (22-24) die Einstellung automatisch erreicht und weiterhin umfaßt:
- Mittel zum Speichern vorbestimmter Werte über die Rotationsbewegung der Hauptwelle (12) für entsprechend programmierbare Werte der Hubeinstellungen, und
- Mittel zum Steuern der Rotationsbewegung der Hauptwelle (12), um einen programmierbaren Wert der Hubeinstellung für eine spezifische Statorlänge zu erhalten.

2. Maschine nach Anspruch 1, dadurch gekennzeichnet, daß das Hin- und Herbewegungsmittel (16, 17, 18) folgendes umfaßt:
- eine Scheibe (17), die gegenüber der Hauptwelle (12) senkrecht geschwenkt ist, so daß die Scheibe (17) zusammen mit der Hauptwelle (12) rotieren kann, und
- Einstellmittel (22-24) zum Festhalten der Scheibe (17) in einer gewünschten Neigung in Bezug zur Hauptwelle (12) während des Hin- und Herbewegungshubes der Wickelnadeln (68, 76).

3. Maschine nach den Ansprüchen 1 und 2, dadurch gekennzeichnet, daß das Einstellmittel (22-24) die Neigung der Scheibe (17) relativ zur Hauptwelle (12) durch einen vorbestimmten Wert einstellt, um den Hin- und Herbewegungshub des Schaftes (35) einzustellen.

4. Maschine nach Anspruch 3, dadurch gekennzeichnet, daß das Einstellmittel (22-24) zum Einstellen einer gewünschten Neigung der Scheibe (17) relativ zur Hauptwelle (12) folgendes umfaßt:
- Verbindungsmittel (22), um die Scheibe (17) mit einer Hülse (24) zu verbinden, und Mittel (11, 84), um eine relative Rotation der Hülse (24) und der Hauptwelle (12) zu verursachen, um eine Einstellung des Hin- und Herbewegungshubes des Schaftes (35) zu erreichen.

5. Maschine nach Anspruch 3, bei der die Mittel zum Einstellen der Hin- und Herbewegung des Schaftes (35) die Einstellung automatisch erreichen und weiterhin folgendes umfassen:
- Mittel zum Speichern der vorbestimmten Werte der Hubeinstellung;
- Mittel zum Steuern der Neigung der Scheibe (17) gegenüber der Hauptwelle (12), um einen programmierbaren Wert der Hubeinstellung für eine spezifische Statorlänge zu erzielen.

6. Maschine nach Anspruch 4, bei der die Hülse (24), die auf der Hauptwelle (12) befestigt ist, sich in Axialrichtung relativ zur Hauptwelle (12) bewegt, um die Neigung der Scheibe (17) während der Einstellung des Hin- und Herbewegungshubes des Schaftes (35) zu ändern.

7. Maschine nach Anspruch 2, bei der das Einstellmittel (22-24) zum Festhalten der Scheibe (17) in einer gewünschten Neigung relativ zur Hauptwelle (12) folgendes umfaßt:
- Verbindungsmittel (22), um die Scheibe (17) mit einer Hülse (24) zu verbinden, wobei letztere so montiert ist, um mit der Hauptwelle (12) während der Hin- und Herbewegung des Schaftes (35) zusammen zu rotieren.

8. Maschine nach den Ansprüchen 1 und 2, bei der die Hin- und Herbewegungsmittel (16, 17, 18) Mittel (32, 34) umfassen, um die Scheibe (17) mit dem Schaft (35) zu verbinden, um eine Relativbewegung der Scheibe (17) in Bezug zum Schaft (35) während der Hin- und Herbewegung des Schaftes (35) zu ermöglichen.

9. Maschine nach Anspruch 1, bei der die Mittel zum Verbinden der Scheibe (17) mit dem Schaft (35) folgendes umfassen:
- Gestellmittel (18), um die Scheibe zu befestigen und um der Scheibe eine Rotation mit der Hauptwelle (12) zu ermöglichen;
- Gleitzeigermittel (32), das an dem Gestellmittel (18) befestigt ist und ein Schwenkmittel (34), um das Gleitzeigermittel (32) mit dem Schaft (35) zu verbinden.

10. Maschine nach Anspruch 1, bei der das Einstellmittel (22-24) weiterhin umfaßt:
- Mittel (82, 84, 28) zum Anhalten der Bewegung eines Abschnittes der Hin- und Herbewegungsmittel (16, 17, 18) in Bezug zum Gehäuse (10) während der Rotationsbewegung der Hauptwelle (12), um einen programmierbaren Wert der Hubeinstellung für eine spezifische Statorlänge zu erhalten.

11. Maschine nach Anspruch 10, bei der das Mittel zum Anhalten folgendes umfaßt:
eine Pneumatikeinheit (82), die einen Stift (84) in eine Kerbe (28) des besagten Teiles der Hin- und Herbewegungsmittel (16, 17, 18) eingreifen läßt, um die Bewegung des Teiles der Hin- und Herbewegungsmittel anzuhalten.

12. Verfahren zum Wickeln variabler Statorlängen für eine Maschine zum Wickeln von Statoren, dadurch gekennzeichnet, daß es die folgenden Verfahrensschritte aufweist:
- Rotieren einer Hauptwelle (12);
- Hin- und Herbewegen eines Schaftes (35) in Längsrichtung, um die Wickelnadeln dazu zu veranlassen, durch den Stator mit Hublängen zu übertragen, die von der Länge des zu wickelnden Stators und von der Reaktion der Rotationsbewegung der Hauptwelle abhängen;
- Speichern von vorbestimmten Werten der Umdrehungen der Hauptwelle (12), die den Hublängen entsprechen und von der Länge des zu wickelnden Stators abhängen; und
- Steuern der Rotation der Hauptwelle (12), um programmierbare Hublängen zu erhalten, die von der Länge des zu wickelnden Stators abhängen.

13. Verfahren nach Anspruch 12, weiterhin die folgenden Verfahrensschritte umfassend:
- Koppeln einer Scheibe (17) mit einer Hülse (24), die auf der Hauptwelle (12) befestigt ist, so daß die Scheibe zusammen mit der Hauptwelle rotieren kann und so daß die Scheibe in Bezug zur Längsachse der Rotation der Hauptwelle geneigt werden kann;
- Verbinden der Scheibe mit dem Schaft (35), um die Rotationsbewegung der Hauptwelle in eine Hin- und Herbewegung des Schaftes umzuwandeln;
- Einstellen der Neigung der Scheibe, um den Hin- und Herbewegungshub des Schaftes so zu modifizieren, daß die Wickelnadeln durch den Stator um Hublängen übertragen, die von der Länge des zu wickelnden Stators abhängen;
- Hervorrufen einer relativen Rotation der Hauptwelle (12) und der Hülse (24) um vorbestimmte Werte, die von der Hubeinstellung abhängen, die für eine zu wickelnde Statorlänge notwendig ist.

## Revendications

1. Machine de mise en oeuvre d'aiguilles pour la fabrication de bobinages de champ de stators, comprenant:
- un boîtier (10) et des aiguilles (68, 76) qui accomplissent un mouvement longitudinal de va-et-vient et un mouvement oscillatoire pour amener du fil de façon à former des bobinages de champ;
- un arbre principal (12) entraîné en vue d'un mouvement de rotation par un moyen de moteur (11);
- un arbre (35) à axe longitudinal qui est monté en vue d'un déplacement longitudinal en va-et-vient par rapport au boîtier (10) parallèlement audit axe longitudinal;
- un moyen de connexion (61 à 66, 70, 75) pour connecter les aiguilles (68, 76) à l'arbre (35) et pour amener les aiguilles (68, 76) à se déplacer longitudinalement en va-et-vient, en réponse au déplacement longitudinal en va-et-vient de l'arbre (35);
- un moyen de déplacement en va-et-vient (16, 17, 18) pour amener les aiguilles (68, 76) à se déplacer longitudinalement en va-et-vient sur une course qui dépend de la longueur du stator, en réponse au mouvement de rotation dudit arbre principal;
- un moyen de mise en oscillation (53, 54) pour amener les aiguilles (68, 76) à osciller en rotation;
- un moyen d'ajustement (22 à 24) pour ajuster ladite course en fonction de la longueur dudit stator;
caractérisée en ce que
- le moyen d'ajustement (22 à 24) réalise automatiquement l'ajustement et comprend en outre:
- un moyen de mémorisation d'ampleurs prédéterminées du mouvement de rotation de l'arbre principal (12) pour des ampleurs programmables correspondantes dudit ajustement de course, et
- un moyen de commande du mouvement de rotation de l'arbre principal (12) permettant de réaliser, pour une longueur spécifique du stator, une ampleur programmable de l'ajustement de course.

2. Machine selon la revendication 1, caractérisée en ce que le moyen de déplacement en va-et-vient (16, 17, 18) comprend:
- un disque (17) monté à pivotement perpendiculairement à l'arbre principal (12), de façon que le disque (17) puisse tourner avec l'arbre principal (12), et
- un moyen (22 à 24) pour maintenir le disque (17) selon une inclinaison souhaitée par rapport à l'arbre principal (12) pendant la course de va-et-vient des aiguilles (68, 76).

3. Machine selon les revendications 1 et 2, caractérisée en ce que le moyen d'ajustement (22 à 24) ajuste d'une ampleur prédéterminée l'inclinaison du disque (17) par rapport à l'arbre principal (12) de façon à ajuster la course de va-et-vient dudit arbre (35).

4. Machine selon la revendication 3, dans laquelle le moyen d'ajustement (22 à 24) du disque (17) selon une inclinaison souhaitée par rapport à l'arbre principal (12) comprend:
- un moyen de liaison (22) pour connecter le disque (17) à un manchon (24), et un moyen (11, 84) destiné à réaliser une rotation relative dudit manchon (24) et dudit arbre principal (12) de façon à réaliser l'ajustement de la course de va-et-vient de l'arbre (35).

5. Machine selon la revendication 3, dans laquelle le moyen d'ajustement de la course de va-et-vient de l'arbre (35) réalise automatiquement l'ajustement, et comprend en outre:
- un moyen de mémorisation d'ampleurs prédéterminées des ajustements de course, et
- un moyen de commande de l'inclinaison du disque (17) par rapport à l'arbre principal (12) de façon à réaliser, pour une longueur spécifique du stator, une ampleur programmable dudit ajustement de course.

6. Machine selon la revendication 4, dans laquelle le manchon (24) qui est monté sur l'arbre principal (12) se déplace axialement par rapport audit arbre principal (12) de façon à modifier l'inclinaison du disque (17) au cours de l'ajustement de la course de va-et-vient de l'arbre (35).

7. Machine selon la revendication 2, dans laquelle le moyen de maintien (22 à 24) du disque (17) selon une inclinaison souhaitée par rapport à l'arbre principal (12) comprend:
un moyen de liaison (22) destiné à connecter le disque (17) à un manchon (24) assemblé de façon à tourner avec l'arbre principal (12) pendant un déplacement en va-et-vient de l'arbre (35).

8. Machine selon les revendications 1 et 2, dans laquelle le moyen de déplacement en va-et-vient (16, 17, 18) comprend un moyen (32, 34) de connexion du disque (17) à l'arbre (35) de façon à permettre un mouvement relatif dudit disque (17) par rapport à l'arbre (35) pendant le déplacement en va-et-vient dudit arbre (35).

9. Machine selon la revendication 1, dans laquelle le moyen de connexion du disque (17) à l'arbre (35) comprend:
- un moyen de châssis (18) pour recevoir le disque et permettre une rotation du disque par rapport à l'arbre principal (12);
- un moyen de curseur (32) monté à coulissement sur le moyen de châssis (18), et un moyen de pivotement (34) pour connecter le moyen de curseur (32) à l'arbre (35).

10. Machine selon la revendication 1, dans laquelle le moyen d'ajustement comprend en outre:
- un moyen (82, 84, 28) d'arrêt du mouvement d'une partie du moyen de déplacement en va-et-vient (16, 17, 18) par rapport au boîtier (10) au cours du mouvement de rotation de l'arbre principal (12) de façon à réaliser, pour une longueur spécifique du stator, une ampleur programmable dudit ajustement de course.

11. Machine selon la revendication 10, dans laquelle le moyen d'arrêt comprend:
- une unité pneumatique (82) qui vient au contact d'une broche (84) dans une encoche (28) de ladite partie du moyen de déplacement en va-et-vient (16, 17, 18) pour arrêter le mouvement de ladite partie dudit moyen de déplacement en va-et-vient.

12. Dans une machine destinée à bobiner des stators, un procédé de bobinage de stators de longueurs variables, qui est caractérisé en ce qu'il comprend les étapes consistant à:
- faire tourner un arbre principal (12);
- déplacer en va-et-vient un arbre longitudinal (35) de façon à amener des aiguilles à se déplacer en translation sur l'ensemble du stator selon des courses qui dépendent de la longueur du stator en cours de bobinage et en réponse à la rotation dudit arbre principal; et
- mémoriser des ampleurs prédéterminées de rotation dudit arbre principal (12) qui correspondent auxdites courses et dépendent de la longueur du stator en cours de bobinage; et
- commander la rotation dudit arbre principal (12) de façon à réaliser des courses programmables qui dépendent de la longueur du stator à bobiner.

13. Procédé selon la revendication 12, comprenant en outre les étapes consistant à:
- accoupler un disque (17) à un manchon (24) monté sur l'arbre principal (12) de façon que le disque puisse tourner avec l'arbre principal et que le disque puisse être incliné par rapport à l'axe longitudinal de rotation de l'arbre principal;
- connecter le disque à l'arbre (35) de façon à convertir en un déplacement en va-et-vient de l'arbre principal la rotation de l'arbre;
- ajuster l'inclinaison du disque de façon à modifier la course de va-et-vient de l'arbre afin que les aiguilles se déplacent en translation sur l'ensemble du stator selon des courses qui dépendent de la longueur du stator en cours de bobinage;
- provoquer une rotation relative, dudit arbre principal (12) et dudit manchon (24), d'ampleurs prédéterminées qui dépendent de l'ajustement de la course nécessaire pour une longueur de stator à bobiner.
